# EUROPEAN PATENT APPLICATION

(11) **EP 4 756 260 A1**
(43) Date of publication of application: **10.06.2026**
(21) Application number: 24218496.8
(22) Date of filing: 09.12.2024
(51) Int. Cl.: F16H 63/34

(54) **LOCKING ARRANGEMENT FOR A GEARING OF A VEHICLE**

(71) Applicant: ZF Friedrichshafen AG, 88046 Friedrichshafen (DE)
(72) Inventor: Nachare, Onkar, 500032 Hyderabad (IN); Kota, Nagachetan, 500032 Hyderabad (IN)
(74) Representative: WBH Wachenhausen Patentanwälte PartG mbB

(57) **Abstract**

The present disclosure relates to a locking arrangement for a gearing (10) of a vehicle (1). The gearing comprises a stationary member (12), an input shaft (4), at least one output shaft (6) and a planetary gear set (80) with an element (83) non-rotatably coupled to the output shaft. The locking arrangement comprises a locking mechanism (20) with an engaging element (22), an engaged element (30) and an electromagnetic actuation device (40). The engaging element is movably supported with respect to the stationary member. The engaged element is non-rotatable with respect to the element of the gearing and is configured for engagement with the engaging element to lock the output shaft to the stationary member. The electromagnetic actuation device (40) is configured to apply an electromagnetic operating force (94) to the engaging element for operating the locking mechanism (20).

## Description

### Technical Field

The present disclosure refers to a locking arrangement for a gearing of a vehicle. The present disclosure also relates to a gearing with such a locking arrangement, and to a vehicle with such a gearing or such a locking mechanism.

### Prior art

Park lock devices are known for locking a driving device of a vehicle such that the vehicle can be maintained in a parking state, for example when the vehicle is situated on an inclined ground. It is of significant importance that the vehicle is able to reliably and quickly activate and deactivate the parking state.

### Summary of the invention

The present disclosure relates in a first aspect to a locking arrangement for a gearing of a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying torque. The driving unit may comprise an internal combustion engine and/or an electric motor. The electric motor may comprise a rotor mechanically connected to a rotor shaft. The electric motor may be configured to convert an input electric power into an output power applied to the rotor shaft. Further to the rotor, the electric motor may comprise a non-rotating stator. At least one of the rotor and the stator may be provided for inducing a magnetic field. The electric motor may receive electric energy from an energy source, for example a battery or a fuel cell, and convert it to rotational mechanical energy, for example to a driving torque for the rotor shaft.

The gearing comprises a stationary member. The stationary member may be configured to provide support and for receiving forces and torques. The stationary member may be provided as one or several housings for enclosing stationary and/or rotational components of the gearing and/or the driving unit. The stationary member may comprise several detachable housing portions. Each housing portion may be configured to accommodate and support different components. For example, the housing may comprise one or more housing portions for enclosing and rotatably supporting the gearing. The exemplary housing portions may be mounted to each other or formed integrally with each other. The gearing comprises an input shaft. The input shaft may be configured for receiving power from the driving unit and for introducing power into the gearing. The input shaft may be operatively connected to the rotor shaft. In one example, the input shaft and the rotor shaft may be integrally formed. In another example, the input shaft may be permanently or selectively non-rotatably connected to the rotor shaft. In another example, a transmission may be interposed between the input shaft and the rotor shaft. Thereby, the input shaft may be configured for directly or indirectly receiving power, for example a rotational speed and a torque, from the driving unit.

The gearing comprises at least one output shaft. The output shaft may be arranged coaxially to the input shaft. Further output shafts may be provided. At least one output shaft of the gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements.

The gearing comprises a planetary gear set. The planetary gear set comprises an element non-rotatably coupled to the output shaft. The element may be a rotating element of the planetary gear set directly or indirectly coupled to the output shaft for transferring torque from the planetary gear set to the output shaft. For example, the element of the gearing may be non-rotatably coupled to the output shaft via a coupling element configured for transferring torque. Further to the planetary gear set, the gearing may comprise one or more further gear sets. The gear set or sets may be formed as spur gears, planetary gears, bevel gears or other suitable gears. The gearing may be configured as a distribution gearing for distributing power applied to the input shaft between two output shafts. The distribution gearing may provide a differential function for allowing rotation speed differences between the two output shafts. The drive element may be, for example, a wheel for contacting the ground or a drive wheel or sprocket for tracks. The vehicle may comprise a shiftable transmission disposed in a power flow between the electrical motor and the drive element.

The locking arrangement comprises a locking mechanism. The locking mechanism comprises an engaging element. The engaging element is movably supported with respect to the stationary member. For example, the engaging element may be rotatably supported with respect to the stationary member. Alternatively or additionally, the engaging element may be slidingly supported with respect to the stationary member. The locking mechanism further comprises an engaged element. The engaged element is non-rotatable with respect to the element of the gearing. The engaged element may be permanently non-rotatably connected to the element of the gearing. The engaged element may be provided separately from the element of the gearing and may be joined, for example welded, to the element of the gearing. Alternatively, the engaged element may be provided integrally with the element of the gearing. The engaged element is configured for engagement with the engaging element to lock the output shaft to the stationary member. The engaging element and the engaged element may comprise structures or other features for allowing engagement therebetween. Examples for such structures are given further below.

The locking mechanism further comprises an electromagnetic actuation device. The electromagnetic actuation device is configured to apply an electromagnetic operating force to the engaging element for operating the locking mechanism. The operation of the locking mechanism may include selectively forcing the engaging element towards at least one of an unlocked position and a locked position. The locked position may be a position of the engaging element nearer to the engaged element than the unlocked position. Engagement may be present in the locked position of the engaging element and may not be present in the unlocked position of the engaging element. The operation of the locking mechanism may be carried out at least partly by means of the applied electromagnetic operating force. The electromagnetic operating force may be applied directly or indirectly to the engaging element. For example, the electromagnetic operating force may be configured for forcing the engaging element towards its locked position. A direction of the electromagnetic operating force may at least partly coincide with a direction of movability of the engaging element, for example a direction of movement towards the engaged element. The electromagnetic actuation device may comprise at least one of an electromagnet, a permanent magnet, a ferromagnetic element, a biasing element, an actuator, a control unit and a wire for connecting elements to the control unit. The electromagnetic operating force may be an attracting force between two attracted elements. At least one of the attracted elements may be configured for selectively generating a magnetic field. At least the other of the attracted elements may be formed such that the attracting force arises when the magnetic field is applied thereto. For example, one of the attracted elements may be formed as an electromagnet described later, and the other of the attracted elements may be formed as a ferromagnetic element comprising a ferromagnetic material. In one example, the engaged element is formed as the ferromagnetic element. In another example, the ferromagnetic element is a separate element arranged in the vicinity of the engaged element.

According to the first aspect, the engaging element is supported with respect to the stationary member and the engaged element is non-rotatably connected to the element of the gearing, which in turn is non-rotatably connected to the output shaft. Thus, the engagement between the engaging element and the engaged element may be used to non-rotatably fix the element of the gearing to the stationary member in order to lock rotation of the output shaft with respect to the stationary member. Furthermore, the locking mechanism is operated at least partly by means of the electromagnetic actuation device, which has a high responsiveness and good controllability. Thus, with the locking arrangement of the first aspect, the output shaft can be locked to the stationary member and unlocked therefrom at high speeds and with high reliability.

In an embodiment, the electromagnetic actuation device comprises an electromagnet fixed to the engaging element. An electromagnet may be a type of magnet in which the magnetic field is produced by applying an electric current so as to energize the electromagnet. For example, the electromagnet may be formed as a coil with or without a core. When a current flows through the coil, a magnetic field may be created. The magnetic field may be concentrated in the core or in a hole at the center of the coil. The magnetic field may dissolve when the current is turned off. Unlike permanent magnets, the state of the electromagnet can be quickly changed by controlling the electric current. That is, the electromagnet behaves like a permanent magnet as long as an electric current is applied. The strength of the magnetic field can be varied by varying the voltage applied to the electromagnet. Thus, by using an electromagnet, the electromagnetic operating force provided by the electromagnetic actuation device can be controlled with high precision. Furthermore, by fixing the electromagnet to the engaged element, the electromagnetic operating force may be applied directly to the engaging element, without coupling members and corresponding elasticities interposed therebetween. Accordingly, responsiveness for applying the electromagnetic operating force can be improved.

In an embodiment, the electromagnet is configured as a direct current electromagnet. For a predetermined voltage applied to an electromagnet, generally a higher current will flow in a direct current electromagnet than in an alternating current electromagnet, since there is no inductive reactance in the circuit of the direct current electromagnet. Accordingly, the direct current electromagnet provides a stronger magnetic field for applying the electromagnetic operating force. Thus, a higher electromagnetic operating force can be provided, thereby improving responsiveness. Furthermore, if the electromagnet is fixed to the engaged element, the weight of the electromagnet can be decreased by providing a smaller direct current electromagnet compared to an alternating current magnet of similar strength, thereby again improving responsiveness.

In an embodiment, the electromagnetic operating force forces the engaging element towards the engaged element. Accordingly, the electromagnetic operating force may force the engaging element towards its locked position. Thus, the output shaft may be locked by means of the electromagnetic operating force with a high responsiveness. In an alternative embodiment, the electromagnetic operating force may force the engaging element away from the engaged element. Thereby, the output shaft may be unlocked with a high responsiveness.

In an embodiment, the locking mechanism comprises a biasing element configured to bias the engaging element in a direction opposite to the direction of the electromagnetic operating force. In such an embodiment, the electromagnetic operating force may need to overcome a biasing force of the biasing element so as to force the engaging element towards or away from the engaged element. In case the electromagnetic operating force forces the engaging element towards a locked position as described above, when a power supply is interrupted, the engaging element is returned to its unlocked position by means of the biasing element, such that the output shaft is automatically unlocked. This may be advantageous when the output shaft is to be locked at a standstill of the vehicle while the vehicle remains in operation, for example during a temporary stop at an inclination. In an alternative embodiment, the electromagnetic operating force may force the engaging element away from the engaged element and the biasing element may bias the engaging element towards the engaged element such that the output shaft is automatically locked when the vehicle is not in operation. This may be advantageous with regards to an operational safety aspect. In an alternative embodiment, the electromagnetic actuation device is configured in double acting manner such that it can provide an electromagnetic operating force in both directions, namely towards the locked and unlocked positions. In such an embodiment, the biasing element may be omitted or may be provided so as to improve responsiveness in one direction of the electromagnetic operating force. In an alternative embodiment, another device for selectively operating the engaging element in a direction opposite to the electromagnetic operating force may be provided, for example another electromagnetic actuation device.

In an embodiment, the engaging element is formed as a pawl with a rotation axis and a distal end. For example, the rotational axis may be stationary with respect to the stationary member and may provide a pivot point for the pawl. The pawl may be rotatably supported around the rotation axis, for example by means of a bearing or a joint. The pawl may have an elongated shape extending away from the rotation axis. The distal end may be distal with respect to the rotation axis. The engaging element may comprise a lock element for the engagement with the engaged element at the distal end of the engaging element. A plurality of engaging elements and/or a plurality of lock elements may be provided. In one example, a single engaging element is provided with a single lock element. The lock element may establish engagement by frictional engagement or geometric fit. For example, the lock element may be formed as a tooth. The engaged element may comprise a complementary element for engagement with the lock element. The complementary element may be provided with a shape complementary to a shape of the lock element. For example, in case the lock element is provided as a tooth, the complementary element may be provided as a recess shaped for accommodating the tooth. With respect to a central axis of the engaged element, the recess may be formed at a lager circumferential range than that of the lock element. The engaged element may be formed as an annular member with the complementary element arranged at a circumference thereof. A plurality of engaged elements and/or a plurality of complementary elements may be provided. In one example, the engaged element may be formed as an annular member with a plurality, for example eight, complementary elements arranged at a circumference thereof.

In an embodiment, the engaging element is arranged radially outside of the engaged element. The engaging element and the engaged element may be arranged in the same plane in the axial direction. Thereby, the locking assembly may be configured compact in the axial direction. In case the engaging element moves towards the engaged element in a radial direction for engagement, the arrangement radially outside the engaged element may relate at least to an unlocked position of the engaging element. A rotating movement of the engaging element to the locked position may be directed inwards in the radial direction. The engaging element, for example its lock element, may protrude inwards in the radial direction. Thereby, the differential transmission may be configured compact in the radial direction. Furthermore, by arranging the engaging element radially outside the engaged element, an effective diameter of the engagement is large, such that low engagement forces may effectively lock the output shaft even when high torques are applied to the output shaft. In an embodiment, the engaging element and the electromagnetic actuation device may be arranged axially away from an electric motor of the driving unit. In such an example, interference of an electromagnetic field of the electric motor with the electromagnetic actuation device is minimized.

In a second aspect, the present disclosure relates to a gearing. The gearing comprises a locking assembly according to the first aspect. The respective advantages and further features can be taken from the description of the first aspect, wherein embodiments of the first aspect also form embodiments of the second aspect and vice versa. In an embodiment, the gearing is configured as a distribution gearing for distributing power of the input shaft between the output shaft and a further output shaft. In an embodiment, the gearing comprises a differential locking mechanism configured to lock relative rotation between the output shaft and the further output shaft. By means of the differential locking mechanism, locking the output shaft may also be used to lock the further output shaft.

In an embodiment, the differential locking mechanism comprises a sliding element configured to transfer torque between both output shafts in a locked position of the sliding element. The sliding element may be operable between its locked position and an unlocked position thereof. The sliding element may be operated by means of a hydraulic, pneumatic, electric and/or electromagnetic actuator. In one example, the sliding element may be operated by a piston subjected to pressurized fluid in a chamber adjacent to the piston. The piston may be connected to the sliding element via a pin. The sliding element may be provided as an annular member. The annular member may be arranged, for example, in a radial gap between the output shafts. The sliding element may comprise elements for torque transmission, for example a geometric fit. In one example, the output shafts may be arranged coaxially to each other and the sliding element may comprise a spline for transferring torque to one output shaft and another spline for transferring torque to the other output shaft. In one example, the one spline may be provided as an internal spline and the other spline may be provided as an external spline. The output shafts may comprise complementary splines for transferring torque. A complementary spline of one output shaft may be provided only in a locked position of the sliding element and a complementary spline of another output shaft may be provided in the locked position and optionally also in the unlocked position. With the present embodiment, a differential locking mechanism with a simple configuration is provided.

In an embodiment, the gearing comprises a first planetary gear set and a second planetary gear set. The first planetary gear set may comprise at least a first element, a second element and a third element. The second planetary gear set may comprise at least a first element, a second element and a third element. The input shaft may be non-rotatably connected to the first element of the first planetary gear set. The second element of the first planetary gear set may be non-rotatably connected to the further output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to the output shaft.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. The respective planetary gear set may be a plus or a minus planetary gear set. Each of the planetary gear sets may have planetary gears that may be rotatably mounted on the respective planetary carrier of the respective planetary gear set. The planetary gears may mesh with both the sun gear and the ring gear of the respective planetary gear set.

With the configuration of the gearing according to the present embodiment, a power distribution function for distributing power between the output shaft and the further output shaft is provided with a simple and compact configuration. In an alternative embodiment, only the further output shaft is provided, the output shaft and the differential locking mechanism are omitted and the third element of the second planetary gear set is non-rotatably connected to the second element of the first planetary gear set instead of the output shaft. Thereby, a gearing with a particularly high transmission ratio is provided. In this alternative embodiment, instead of locking the output shaft, the locking mechanism may be configured to lock the further output shaft to the stationary member via the third element of the second planetary gear set.

In an embodiment, the third element of the second planetary gear set is selectively non-rotatably connectable to the stationary member via the locking mechanism. For example, the engaged element may be permanently non-rotatably connected to the third element of the second planetary gear set. The permanent non-rotatable connection may be provided by attaching, for example by means of screws, and/or by joining, for example by welding, the engaged element to the third element of the second planetary gear set or to another element non-rotatably connected to the third element. In one example, the engaged element is welded to a coupling element for coupling the third element to the output shaft, and the coupling element is permanently non-rotatably connected to both the third element and the output shaft.

In an embodiment, each first element of the planetary gear sets is a sun gear, each second element of the planetary gear sets is a planetary carrier and each third element of the planetary gear sets is a ring gear. The ring gear of the first planetary gear set may be formed integrally with the sun gear of the second planetary gear set. Thereby, a gearing with compact dimensions can be provided. In one example, the first planetary gear set and the second planetary gear set may be offset from each other in the axial direction and may at least partly overlap with each other in the radial direction. Thereby, a dimension in the radial direction can be compact. In another example, the first planetary gear set and the second planetary gear set may be arranged radially adjacent to each other, for example in the same axial plane. Thereby, a dimension in the axial direction may be compact.

In a third aspect, the present disclosure relates to a vehicle. The vehicle comprises a locking assembly according to the first aspect or a gearing according to the second aspect. The respective advantages and further features can be taken from the descriptions of the first or second aspect, wherein embodiments of the first or second aspect also form embodiments of the third aspect and vice versa.

### Brief description of drawings

Figure 1 shows a vehicle with a gearing according to an embodiment.
Figure 2 schematically shows a general layout of a gearing according to an embodiment.
Figure 3 schematically shows a cross section of a gearing according to an embodiment.
Figure 4 schematically shows a simplified view of a locking mechanism according to an embodiment.
Figure 5 schematically shows a side view of the gearing of Figure 3 and the locking mechanism of Figure 4 with an engaging element being arranged in an unlocked position.
Figure 6 schematically shows a perspective view of the gearing and locking mechanism of Figure 5.
Figure 7 schematically shows a side view of the gearing of Figure 3 and the locking mechanism of Figure 4 with an engaging element being arranged in a locked position.
Figure 8 schematically shows a cross section of a differential locking mechanism of the gearing of Figure 3 with a sliding element being arranged in an unlocked position.
Figure 9 schematically shows a cross section of the differential locking mechanism of the gearing of Figure 3 with a sliding element being arranged in a locked position.

### Detailed description of embodiments

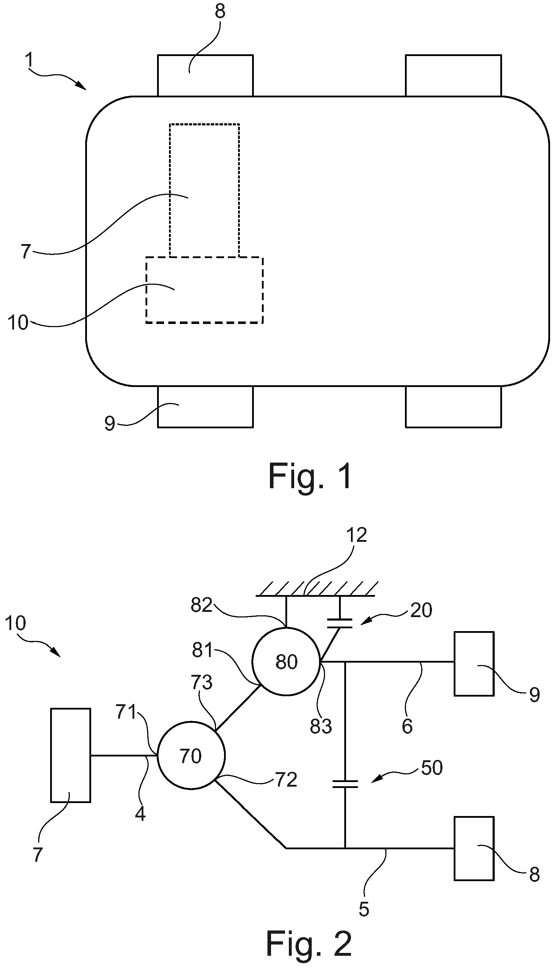

Figure 1 shows a vehicle 1 with a gearing 10 according to an embodiment of the present disclosure. The gearing 10 is driven by a driving unit 7 and is configured for transferring, presently distributing, power input by the driving unit 7 to at least two drive elements 8, 9. In the present embodiment, the driving unit 7 is an electrical motor and the drive elements 8, 9 are wheels of the vehicle 1. Specifically, a first drive element 8 corresponds to a left wheel of the vehicle 1 and a second drive element 9 corresponds to a right wheel of the vehicle 1.

Figure 2 schematically shows a general layout of a gearing 10 according to an embodiment of the present disclosure. The gearing 10 of Figure 2 can be applied to the vehicle 1 of Figure 1. In the present embodiment, the gearing 10 is configured as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. A torque of the driving unit 7 can be introduced into the gearing 10 via the first element 71 of the first planetary gear set 70. For this purpose, an input shaft 4 driven by the driving unit 7 is operatively connected to the first element 71 of the planetary gear set 70, here permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member, here a housing 12. A first output shaft 5 is operatively connected to the second element 72 of the first planetary gear set 70, in this case permanently non-rotatably connected. The first output shaft 5 is operatively connected to the first drive element 8. A second output shaft 6 is operatively connected to the third element 83 of the second planetary gear set 80, in this case permanently non-rotatably connected. The second output shaft 6 is operatively connected to the second drive element 9.

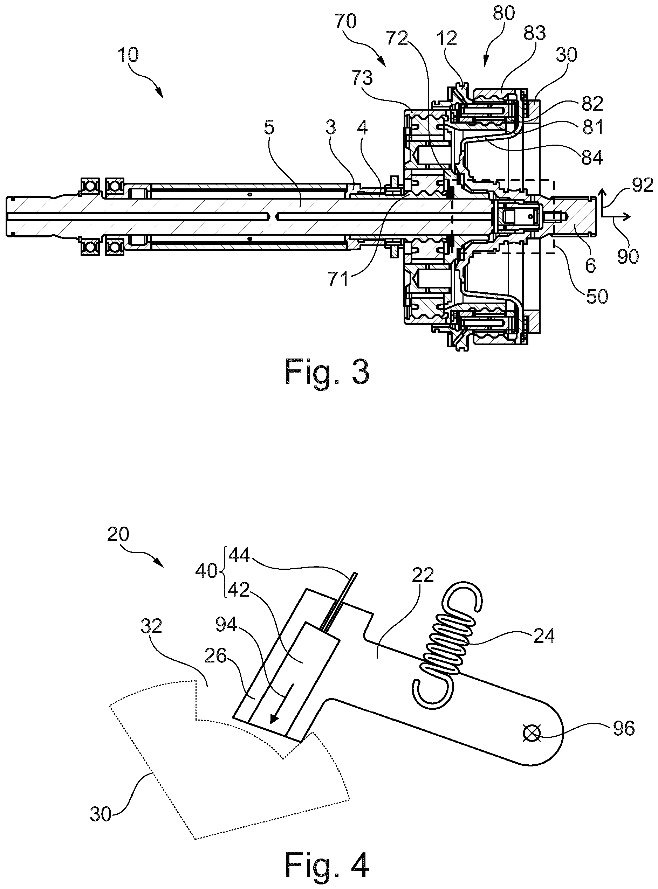

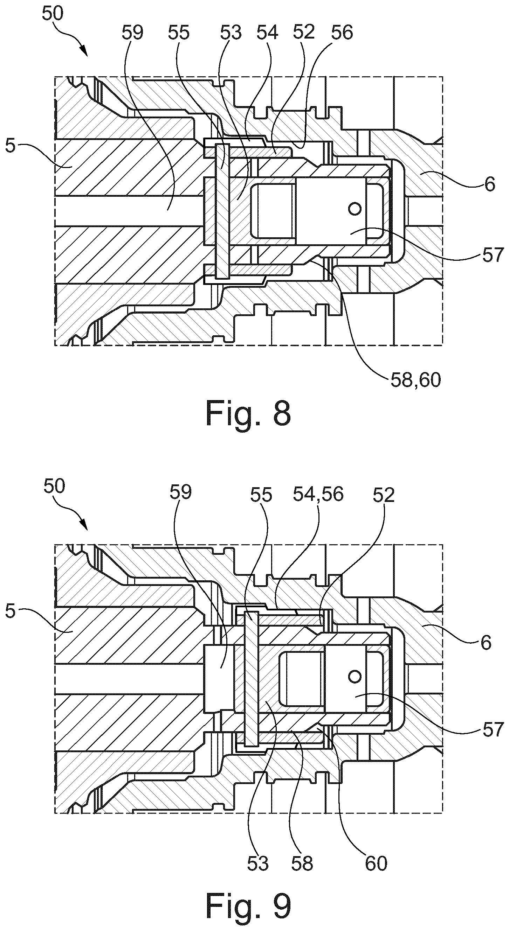

The gearing 10 of Figure 2 further comprises a locking arrangement with a locking mechanism 20 and a differential locking mechanism 50. The locking mechanism 20 is provided for selectively locking the second output shaft 6 to the housing 12. The differential locking mechanism 50 is provided for selectively locking relative rotation between the first output shaft 5 and the second output shaft 6. The locking mechanism 20 will be described in the following with reference to Figure 3. The differential locking mechanism 50 will be described with reference to Figures 8 and 9.

In the embodiment of Figure 2, the gearing 10 comprises the first output shaft 5 and the second output shaft 6, each respectively connected to a drive element 8, 9. The output shafts 5, 6 can be locked via the locking mechanism 20 and the differential locking mechanism 50. In a further embodiment (not shown), a gearing only comprises the first output shaft 5, and the first output shaft 5 is operatively connected to both drive elements 8, 9. In such an embodiment, the third element 83 of the second planetary gear set 80 is permanently non-rotatably connected to the second element 72 of the first planetary gear set 70 and thus the first output shaft 5. The locking mechanism 20 is thereby configured to lock the first output shaft 5 to the stationary member 12 via the third element 83 of the second planetary gear set 80 and the second element 72 of the first planetary gear set 70. The differential locking mechanism 50 as well as the second output shaft 6 are omitted in this further embodiment.

Figure 3 schematically shows a cross section of a gearing 10 according to an embodiment. The gearing 10 of Figure 3 is configured with the general layout described with reference to Figure 2. Accordingly, the gearing 10 of the present embodiment comprises an input shaft 4, a first planetary gear set 70 and a second planetary gear set 80. In the present embodiment, the planetary gear sets 70, 80 are offset in an axial direction 90 and overlap in a radial direction 92. The input shaft 4 is presently driven by a rotor shaft 3 of an unshown electric machine. The first and second planetary gear sets 70, 80 each comprise first elements 71, 81 formed as sun gears, second elements 72, 82 formed as planetary carriers and third elements 73, 83 formed as ring gears. The sun gear 71 of the first planetary gear set 70 is permanently non-rotatably connected to the input shaft 4. The planetary carrier 72 of the first planetary gear set 70 is permanently non-rotatably connected to a first output shaft 5. The first output shaft 5 presently extends through the input shaft 4 and the rotor shaft 3. The ring gear 73 of the first planetary gear set 70 is formed integrally with the sun gear 81 of the second planetary gear set 80. The planetary carrier 82 of the second planetary gear set 80 is presently permanently fixed to the housing 12. The ring gear 83 of the second planetary gear set 80 is presently permanently non-rotatably connected to a second output shaft 6 via a coupling element 84. Figure 3 also shows the differential locking mechanism 50 and an engaged element 30 being a part of a locking mechanism 20, which is described in the following.

Figure 4 is a simplified view of the locking mechanism 20 according to an embodiment. The locking mechanism 20 comprises an engaging element 22, the engaged element 30 of Figure 3, which is shown in Figure 4 in a simplified manner, and an electromagnetic actuation device 40. The engaging element 22 is presently formed as a pawl supported by the housing 12 so as to be rotatable around a rotation axis 96. At a distal end of the pawl 22, a lock element 26 is formed, presently as a pawl tooth. The pawl 22 is moveable, presently rotatable, between a locked position shown in Figure 4 and an unlocked position. In the locked position, the lock element 26 is engaged with a complementary element 32. The complementary element 32 is presently formed as a recess formed at a circumference of the engaged element 30, and the lock element 26 enters the recess for engagement. In the unlocked position, the lock element 26 is disengaged from the complementary element 32, presently by being arranged outside the recess. The movement of the pawl 22 is provided by means of the electromagnetic actuation device 40. For forcing the pawl 22 towards the engaged element 30, namely towards the locked position, the electromagnetic actuation device 40 presently comprises a direct current electromagnet 42 fixed to the pawl 22. The electromagnet 42 selectively receives power via a wire 44 connected to a controller (not shown). The controller is configured for selectively energizing the electromagnet 42. When energized, the electromagnet 42 generates an electromagnetic operating force 94 applied to the pawl 22 in a direction towards the engaged element 30. A biasing element 24, presently a tension spring, is attached to the pawl 22 on one end and to the housing 12 on another end. The biasing element 24 biases the pawl 22 in a direction opposite to the direction of the electromagnetic operating force 94, namely away from the engaged element 30. When the electromagnet 42 is not energized, the biasing element 24 returns the pawl 22 to its unlocked position.

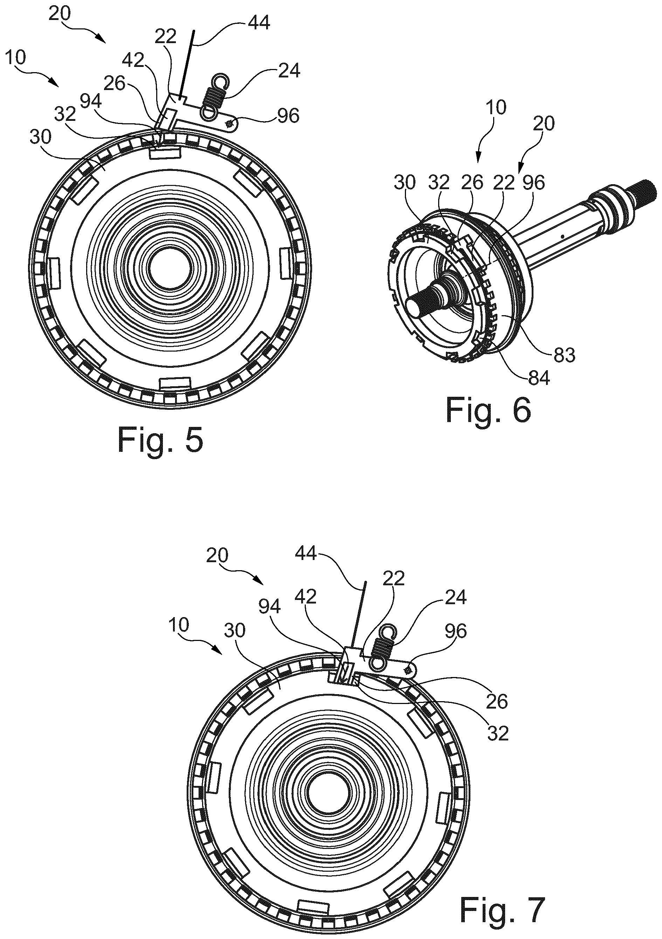

Figures 5 and 6 respectively provide a side view and a perspective view of a gearing 10 comprising the locking mechanism 20 of Figure 4 in an unlocked position of the pawl 22. Note that the electromagnet 42 is not shown in Figure 6. As can be seen from Figures 5 and 6, the engaged element 30 is presently formed as an annular member non-rotatably connected to the coupling element 84. In the present embodiment, the engaged element 30 comprises eight complementary elements 32 formed as recesses evenly spread along the circumference of the engaged element 30. In the unlocked position of the pawl 22, its lock element 26 does not extend into any of the complementary elements 32. Accordingly, rotation of the engaged element 30 and the ring gear 83 of the planetary gear set 80 as well as the second output shaft 6 non-rotatably attached to the engaged element 30 is not hindered by the pawl 22 in the unlocked position of the pawl 22.

Figure 7 schematically shows a side view of the gearing 10 of Figure 3 and the locking mechanism of Figure 4 with the pawl 22 being arranged in a locked position. As can be seen by comparing Figure 7 to Figure 5, in the locked position of the pawl 22 shown in Figure 7, the lock element 26 of the pawl 22 extends into one of the complementary elements 32 of the engaged element 30 such that the pawl 22 is engaged with the engaged element 30. Since the pawl 22 is supported to the housing 12 so as to be rotatable around the rotation axis 96, which does not coincide with a rotation axis of the second output shaft 6, the engagement between the pawl 22 and the engaged element 30 causes the second output shaft 6 to be locked with respect to the housing 12.

Figure 8 schematically shows a cross section of a differential locking mechanism 50 of the gearing 10 of Figure 3 with a sliding element 52 being arranged in an unlocked position. Figure 9 schematically shows a view corresponding to Figure 8 with the sliding element 52 being arranged in a locked position. The sliding element 52 is presently provided as an annular member surrounding a section of the first output shaft 5.

Furthermore, the sliding element 52 is arranged in a radial gap between the first output shaft 5 and the second output shaft 6. The sliding element 52 is connected to a piston 53 via a pin 55. The piston 53 is slidably supported in a first chamber 57 formed in the first output shaft 5. The first chamber 57 may be selectively pressurized by a fluid so as to apply a force to the piston 53 in the direction of the unlocked position of the sliding element 52 shown in Figure 8. A second chamber 59 is formed in the first output shaft 5 on the other axial side of the piston 53. The second chamber 59 may be selectively pressurized by a fluid so as to apply a force to the piston 53 in the direction of the locked position of the sliding element 52 shown in Figure 9. The means for selectively pressurizing the chambers 57, 59 are not shown here.

The sliding element 52 and the output shafts 5, 6 comprise a plurality of elements for torque transmission presently provided as splines. A first spline 54 is provided on a radially outer side of the sliding element 52 facing the second output shaft 6. A second spline 56 is provided on a radially inner side of the second output shaft 6. The second spline 56 is formed with a complementary shape so as to mesh with the first spline 54 for transferring torque between the sliding element 52 and the second output shaft 6 when the sliding element 52 is in the locked position. An axial extent of the second spline 56 is presently set such that the second spline 56 does not mesh with the first spline 54 when the sliding element 52 is in the unlocked position. A third spline 58 is presently provided on a radially outer side of the first output shaft 5 facing a radially inner side of the sliding element 52. The third spline 58 is configured to mesh with a fourth spline 60 formed on the radially inner side of the sliding element 52 (see Figure 9). An axial extent of the third spline 58 is presently set such that the third spline 58 meshes with the fourth spline 60 in both the locked and the unlocked positions of the sliding element 52.

With the above-described configuration, a locking assembly for the gearing 10 is provided. The locking assembly achieves locking of the second output shaft 6 to the housing 12 by means of the pawl 22 of the locking mechanism 20 being in its locked position. Optionally, the locking assembly achieves locking of the first output shaft 5 by means of the sliding element 52 of the optional differential locking mechanism 50 being in its locked position.

### Reference signs

- 1: vehicle
- 3: rotor shaft
- 4: input shaft
- 5, 6: output shaft
- 7: driving unit
- 8, 9: drive element
- 10: gearing
- 12: stationary member
- 20: locking mechanism
- 22: engaging element
- 24: biasing element
- 26: lock element
- 30: engaged element
- 32: complementary element
- 40: electromagnetic actuation device
- 42: electromagnet
- 44: wire
- 50: differential locking mechanism
- 52: sliding element
- 53: piston
- 54, 56, 58, 60: spline
- 55: pin
- 57, 59: chamber
- 70, 80: planetary gear set
- 71, 81: first element
- 72, 82: second element
- 73, 83: third element
- 84: coupling element
- 90, 92: axial, radial directions
- 94: electromagnetic operating force
- 96: rotation axis

## Claims

1. A locking arrangement for a gearing (10) of a vehicle (1), the gearing (10) comprising a stationary member (12), an input shaft (4), at least one output shaft (6) and a planetary gear set (80) with an element (83) non-rotatably coupled to the output shaft (6), wherein the locking arrangement comprises a locking mechanism (20) with an engaging element (22), an engaged element (30) and an electromagnetic actuation device (40), wherein the engaging element (22) is movably supported with respect to the stationary member (12), the engaged element (30) is non-rotatable with respect to the element (83) of the gearing (10) and is configured for engagement with the engaging element (22) to lock the output shaft (6) to the stationary member (12), and the electromagnetic actuation device (40) is configured to apply an electromagnetic operating force (94) to the engaging element (22) for operating the locking mechanism (20).

2. The locking arrangement according to claim 1, **characterized in that** the electromagnetic actuation device (40) comprises an electromagnet (42) fixed to the engaging element (22).

3. The locking arrangement according to claim 2, **characterized in that** the electromagnet (42) is configured as a direct current electromagnet.

4. The locking arrangement according to any one of the preceding claims, **characterized in that** the electromagnetic operating force (94) forces the engaging element (22) towards the engaged element (30).

5. The locking arrangement according to any one of the preceding claims, **characterized in that** the locking mechanism (20) comprises a biasing element (24) configured to bias the engaging element (22) in a direction opposite to the direction of the electromagnetic operating force (94).

6. The locking arrangement according to any one of the preceding claims, **characterized in that** the engaging element (22) is formed as a pawl with a rotation axis (96) and a distal end, the engaging element (22) comprising a lock element (26) for the engagement with the engaged element (30) at the distal end of the engaging element (22), and the engaged element (30) comprises a complementary element (32) for engagement with the lock element (26).

7. The locking arrangement according to any one of the preceding claims, **characterized in that** the engaging element (22) is arranged radially outside of the engaged element (30).

8. A gearing (10) for a vehicle (1) comprising a locking arrangement according to any one of the preceding claims.

9. The gearing (10) according to claim 8, **characterized in that** the gearing (10) is configured as a distribution gearing for distributing power of the input shaft (4) between the output shaft (6) and a further output shaft (5).

10. The gearing (10) according to claim 9, **characterized in that** the gearing (10) comprises a differential locking mechanism (50) configured to lock relative rotation between the output shaft (6) and the further output shaft (5).

11. The gearing (10) according to claim 10, **characterized in that** the differential locking mechanism (50) comprises a sliding element (52) configured to transfer torque between both output shafts (5, 6) in a locked position of the sliding element (52).

12. The gearing (10) according to any one of claims 9 to 11, **characterized by** comprising a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the input shaft (4) is non-rotatably connected to the first element (71) of the first planetary gear set (70), the second element (72) of the first planetary gear set (70) is non-rotatably connected to the further output shaft (5), the third element (73) of the first planetary gear set (70) is non-rotatably connected to the first element (81) of the second planetary gear set (80), the second element (82) of the second planetary gear set (83) is non-rotatably connected to the stationary member (12) and the third element (83) of the second planetary gear set (80) is non-rotatably connected to the output shaft (6).

13. The gearing (10) according to claim 12, **characterized in that** the third element (83) of the second planetary gear set (80) is selectively non-rotatably connectable to the stationary member (12) via the locking mechanism (20).

14. The gearing (10) according to claim 12 or 13, **characterized in that** each first element (71, 81) of the planetary gear sets (70, 80) is a sun gear, each second element (72, 82) of the planetary gear sets (70, 80) is a planetary carrier and each third element (73, 83) of the planetary gear sets (70, 80) is a ring gear.

15. A vehicle (1) comprising a locking arrangement according to any one of claims 1 to 7 or a gearing (10) according to any one of claims 8 to 14.
